(19) Europäisches Patentamt
European Patent Office
Office européen des brevets

(11) **EP 2 210 847 A1**

(12) **EUROPÄISCHE PATENTANMELDUNG**

(43) Veröffentlichungstag:
**28.07.2010 Patentblatt 2010/30**

(51) Int Cl.:
***B66B 15/04*** *(2006.01)*

(21) Anmeldenummer: **09151077.6**

(22) Anmeldetag: **22.01.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(71) Anmelder: **Inventio AG**
**6052 Hergiswil (CH)**

(72) Erfinder: **Zapf, Volker**
**6012, Obernau (CH)**

(54) **Aufzuganlage mit Treibscheibe**

(57)     Eine Treibscheibe (1), die zum Antreiben eines Zugmittels (3) dient, weist eine Traktionsfläche (15) auf, an der eine Struktur (16A-16E) ausgestaltet ist. Dabei trägt die Struktur (16A-16E) zur Traktionswirkung zwischen der Traktionsfläche (15) und dem Zugmittel (3) in einer Umfangsrichtung (18) bei. Die Struktur an der Traktionsfläche (15) kann durch Vertiefungen (16A-16E) ausgestaltet sein, die in einer Querrichtung (17) verlaufen, die senkrecht zu einer Umfangsrichtung (18) der Treibscheibe (2) orientiert ist. Außerdem ist eine Aufzuganlage (1) angegeben, bei der eine Aufzugkabine (5) an einem Zugmittel (3) aufgehängt ist, das über solch eine Treibscheibe (2) geführt ist.

Fig. 1

EP 2 210 847 A1

**Beschreibung**

Technisches Gebiet

Die Erfindung betrifft eine Treibscheibe zum Antreiben eines Zugmittels und eine Aufzuganlage mit solch einer Treibscheibe. Speziell betrifft die Erfindung das Gebiet der Aufzuganlagen, bei denen ein Keilrippenriemen mit einer Riementreibscheibe antreibbar ist.

Stand der Technik

Aus der EP 1 169 256 B1 ist ein Verfahren zum Herstellen einer Traktionsseilscheibe, die zum Zusammenwirken mit einem Aufzugseilelement dient, bekannt. Die mit dem bekannten Verfahren hergestellte Traktionsseilscheibe weist eine Traktionsoberfläche zum Zusammenwirken mit dem Aufzugseilelement und Antreiben desselben auf. Dabei ist die Traktionsoberfläche mit einer Umfangsoberflächenrauhigkeit im Bereich von etwa 1,0 bis etwa 3,0 μm ausgebildet. Verfahrensgemäß wird dies durch Kugelstrahlen oder Sandstrahlen erreicht. Dadurch können die Oberflächeneigenschaften der Traktionsoberfläche zur Verwendung spezieller Aufzugseile, die beispielsweise elastomerbeschichtet sind, beeinflusst werden.

Die mit dem aus der EP 1 169 256 B1 bekannten Verfahren hergestellte Traktionsseilscheibe hat den Nachteil, dass im Stillstand bei gewissen Belastungsverhältnissen des Aufzugseils ein Kriechen zwischen der Treibscheibe und dem Aufzugseil auftreten kann. Insbesondere kann die Umfangsoberflächenrauhigkeit der Traktionsoberfläche der bekannten Traktionsseilscheibe im Betrieb durch Verschmutzungen oder Schmiermittel in ihrer Wirkung reduziert sein. Dieses Problem tritt speziell bei elastomerbeschichteten Tragmitteln auf.

Darstellung der Erfindung

Aufgabe der Erfindung ist es, eine Treibscheibe zu schaffen, die eine verbesserte Traktion ermöglicht, und eine Aufzuganlage mit solch einer Treibscheibe anzugeben. Speziell ist es eine Aufgabe der Erfindung, eine Treibscheibe und eine Aufzuganlage mit solch einer Treibscheibe zu schaffen, bei denen im Stillstand ein Kriechen des Zugmittels infolge eines relativ ausgeprägten Unterschieds zwischen den wirkenden Zugkräften in den beiden zur Treibscheibe führenden Trumen des Zugmittels verhindert oder zumindest verringert ist. Insbesondere soll ein Kriechen beim Zusammenwirken der erfindungsgemässen Treibscheibe mit einem Zugmittel reduziert bzw. verhindert werden, dessen Traktionsfläche aus einem Elastomer besteht.

Die Aufgabe wird durch eine erfindungsgemäße Treibscheibe mit den Merkmalen des Anspruchs 1 und durch eine erfindungsgemäße Aufzuganlage mit den Merkmalen des Anspruchs 14 gelöst.

Durch die in den Unteransprüchen aufgeführten Maßnahmen sind vorteilhafte Weiterbildungen der im Anspruch 1 angegebenen Treibscheibe und der im Anspruch 14 angegebenen Aufzuganlage möglich.

Es ist anzumerken, dass ein Zugmittel neben der Funktion des Tragens der Aufzugkabine auch die Funktion haben kann, die Kraft oder das Moment der Antriebsmaschine zu der Aufzugkabine zu übertragen, um die Aufzugkabine zu betätigen. Unter einer Betätigung der Aufzugkabine wird insbesondere ein Heben oder Senken der Aufzugkabine verstanden. Dabei kann die Aufzugkabine durch eine oder mehrere Führungsschienen geführt sein. Entsprechendes gilt für ein gegebenenfalls vorgesehenes Gegengewicht.

In vorteilhafter Weise verläuft die Struktur an der Traktionsfläche in einer Richtung, die von der Umfangsrichtung abweicht. Speziell verläuft die Struktur im Wesentlichen quer zu der Umfangsrichtung. Dadurch kann eine vorteilhafte Erhöhung der Traktionswirkung erzielt werden. Insbesondere kann sich ein mit einem Elastomer ummanteltes Zugmittel zumindest teilweise an die Struktur anlegen, so dass ein gewisser Formschluss in Bezug auf eine in Umfangsrichtung wirkende Zugkraft gebildet ist. Dieses Anlegen und Einfügen in die Struktur wird durch beidseitig an der Treibscheibe angreifende Kräfte auf das Zugmittel verstärkt. Somit kann auch bei einem ausgeprägten Unterschied zwischen den beidseitig angreifenden Zugkräften ein Kriechen zwischen der Treibscheibe und dem Zugmittel im Stillstand verhindert werden.

In vorteilhafter Weise sind mehrere Vertiefungen vorgesehen, die die Struktur ausbilden. Speziell können Ausnehmungen und/oder Rillen vorgesehen sein. Schmutz, überschüssiges Schmiermittel oder dergleichen kann durch die Ausnehmung oder die Rille abgeleitet werden. Speziell durch in der Struktur enthaltene Rillen können Verschmutzungen und Schmiermittelrückstände und dergleichen durch die Rille abgeleitet werden. Dadurch ist über die Betriebsdauer eine zuverlässige Traktionswirkung in ausreichender Größe gewährleistet.

In vorteilhafter Weise ist eine Vielzahl von Vertiefungen, insbesondere Ausnehmungen und/oder Rillen, vorgesehen, wobei eine mittlere Breite einer Vertiefung kleiner als 3 mm, bevorzugt kleiner als 2 mm und besonders bevorzugt kleiner als 1 mm ist. Ein Durchmesser der Treibscheibe kann dabei kleiner als 200 mm, bevorzugt kleiner als 100 mm und besonders bevorzugt kleiner als 80 mm gewählt werden. Die Vielzahl von Vertiefungen ist dabei vorzugsweise gleichmäßig über den Umfang der Treibscheibe verteilt. Dadurch kann die Traktionswirkung weiter erhöht werden. Als Material für die Herstellung einer erfindungsgemässen Treibscheibe kann vorzugsweise ein Stahl, insbesondere ein vergüteter Stahl, ein Werkzeugstahl, ein Chrom-Nickel-Stahl, ein gehärteter Stahl oder auch ein unbehandelter Stahl, zum Einsatz kommen. Die Treibscheibe kann jedoch auch aus anderen Metallen oder aus einem Kunststoff, beispielsweise aus Polyamid (PA) oder Polyetheretherketon (PEEK), hergestellt sein.

Vorteilhaft ist es auch, dass die Traktionsfläche der Treibscheibe mit einer haftverstärkenden Strukturbeschichtung versehen ist. Dabei ist es ferner vorteilhaft, dass die Strukturbeschichtung kalottenförmige Mikrostrukturen oder dünne Hartstoffschichten mit Nanopartikeln aufweist. Ferner kann eine Beschichtung durch Hartverchromen, eine Keramikbeschichtung oder auch eine Oberflächenhärtung als Oberflächenbehandlung vorgesehen sein.

Speziell kann eine sogenannte Topochrom-Beschichtung als Strukturbeschichtung vorgesehen sein. Hierbei wird galvanisch eine Chromschicht aufgebracht, bei der aus einer Grundchromschicht herausgewachsene kalottenförmige Mikrostrukturen eine Strukturschicht bilden, die von einer dünnen Endschicht aus Chrom bedeckt ist. Die Ausbildung von kalottenförmigen Mikrostrukturen kann durch Prozessparameter, wie Stromstärke, Temperatur und Strömungsgeschwindigkeit des Elektrolyts, während des galvanischen Beschichtungsprozesses gesteuert werden. Dadurch können kalottenförmige Mikrostrukturen mit Durchmessern von beispielsweise weniger als 0,1 mm ausgestaltet werden.

Die Traktionsfläche der Treibscheibe kann auch mit einer dünnen Hartstoffschicht mit Nanopartikeln versehen sein, bei welcher beispielsweise Nanokristalle aus AlTiN oder AlCrN in eine Matrix aus amorphem Siliziumnitrid ($Si_3N_4$) eingebettet sein können.

Vorteilhaft ist es auch, dass die Traktionsfläche eine erhöhte Oberflächenrauhigkeit aufweist. Vorzugsweise sind zum Erhöhen der Oberflächenrauheit Riefen in der Traktionsfläche ausgestaltet, die in einer Querrichtung oder in einer anderen von der Umfangsrichtung abweichenden Richtung verlaufen.

Als Zugmittel sind insbesondere riemenartige Zugmittel mit einem Mantel aus einem Elastomer geeignet. Die in vorteilhafter Weise ausgestaltete Aufzuganlage mit solch einem Zugmittel hat den Vorteil, dass die günstigen Eigenschaften des Zugmittels ausgenutzt werden können, ohne dass ein Kriechen zwischen der Treibscheibe und dem Zugmittel im Stillstand auftritt. Als Elastomer kann insbesondere ein Polyurethan, ein Ethylen-Propylen-Kautschuk (EPDM) oder ein Naturkautschuk zum Einsatz kommen.

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigen:

Fig. 1 eine schematische Darstellung einer Aufzuganlage entsprechend einem ersten Ausführungsbeispiel der Erfindung;

Fig. 2 einen auszugsweisen Schnitt durch die in Fig. 1 gezeigte Aufzuganlage entlang der mit II bezeichneten Schnittlinie entsprechend dem ersten Ausführungsbeispiel der Erfindung und

Fig. 3 den in Fig. 2 mit III bezeichneten Ausschnitt einer Treibscheibe einer Aufzuganlage entsprechend einem zweiten Ausführungsbeispiel der Erfindung.

Bevorzugte Ausführungsformen der Erfindung

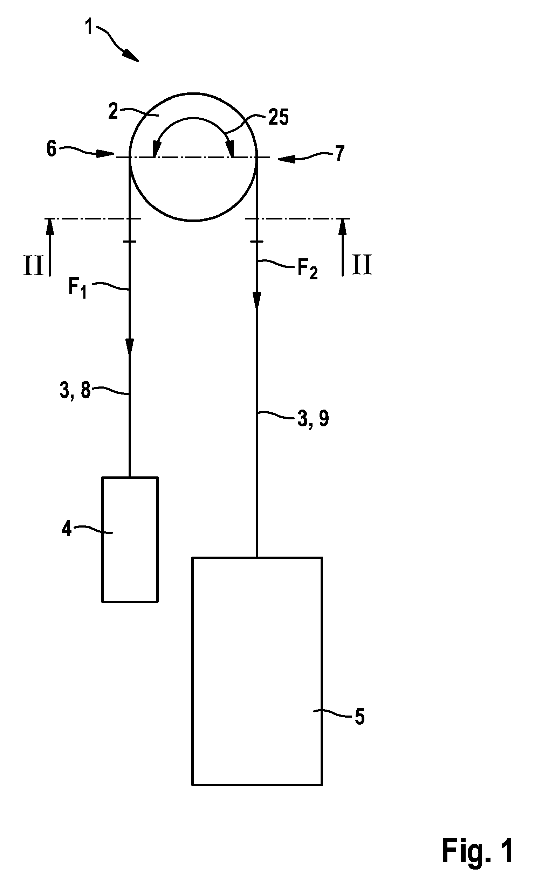

Fig. 1 zeigt eine Aufzuganlage 1 in einer schematischen Darstellung entsprechend einem ersten Ausführungsbeispiel der Erfindung. Die Aufzuganlage 1 weist eine Treibscheibe 2 auf, die zum Antreiben eines Zugmittels 3 dient. Dabei ist in der Fig. 1 ein Fall dargestellt, in dem einerseits ein Gegengewicht 4 und andererseits eine Aufzugkabine 5 mittels des Zugmittels 3 an der Treibscheibe 2 aufgehängt ist. Hierbei sind die im Stillstand der Treibscheibe 2 wirkende Zugkraft F1 durch das Gegengewicht 4 und die Zugkraft F2 durch die Aufzugkabine 5 dargestellt, die an den Seiten 6, 7 der Treibscheibe 2 auf das um die Treibscheibe 2 geführte Zugmittel 3 wirken. Die Treibscheibe 2 ist mit einer Antriebsmaschineneinheit verbunden und beispielsweise im oberen Bereich eines Schachtes der Aufzuganlage 1 positioniert.

In der Fig. 1 ist ein Fall dargestellt, in dem die Kraft F1 des Gegengewichts 4 größer ist als die Kraft F2 der Aufzugkabine 5. Beispielsweise kann die Aufzugkabine 5 unbeladen sein. Die Kraft des Gegengewichts 4 wirkt in dem Trumen 8 des Zugmittels 3 auf der Seite 6 der Treibscheibe 2. Die Kraft F2 der Aufzugkabine 5 wirkt in dem Trumen 9 des Zugmittels 3 auf der Seite 7 der Treibscheibe 2. Ein Verhältnis S der Kräfte F1, F2 in den beiden von der Treibscheibe 2 wegführenden Trumen 8, 9 des Zugmittels 2 ist als Quotient bestimmt mit einem Dividend, der gleich der Kraft F1 des Gegengewichts 4 ist, und einem Divisor, der gleich der Kraft F2 der Aufzugkabine 5 ist:

$$(1) \quad S = F1/F2.$$

Wenn das Verhältnis S außerhalb eines Bereichs von etwa $1/S_{max}$ bis etwa $S_{max}$ ist, dann besteht das Problem, dass bei stehender Treibscheibe 2 ein Kriechen zwischen der Treibscheibe 2 und dem Zugmittel 3 auftritt. Hierbei ist $S_{max}$ notwendigerweise größer als 1. Bei einem herkömmlichen Aufzug kann dieser Bereich beispielsweise durch $S_{max} = 1,7$ bestimmt sein. Je größer der durch $S_{max}$ bestimmte Bereich ist, das heißt je größer $S_{max}$ ist, desto unterschiedlicher können auch die Kräfte F1, F2 ausgeprägt sein, ohne dass ein Kriechen zwischen der Treibscheibe 2 und dem Tragmittel 3 auftritt.

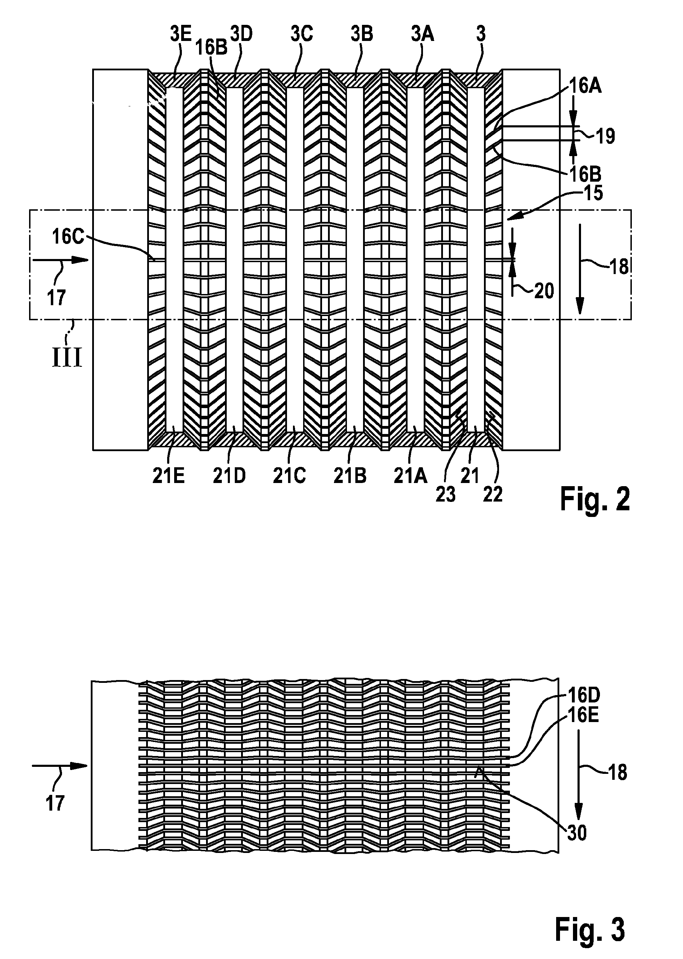

Fig. 2 zeigt einen Schnitt durch die in Fig. 1 gezeigte Aufzuganlage 1 entlang der mit II bezeichneten Schnittlinie. Diese Ansicht zeigt eine Traktionsfläche 15 der Treibscheibe 2. Die Traktionsfläche 15 weist eine Struktur auf, die aus einer Vielzahl von Vertiefungen 16A, 16B, 16C gebildet ist. Dabei sind in der Fig. 2 zur Vereinfachung der Darstellung nur die Vertiefungen 16A, 16B, 16C gekennzeichnet. Die Vertiefungen 16A, 16B, 16C verlaufen jeweils in einer Richtung 17, die von einer Umfangsrichtung 18 abweicht. Speziell ist die Richtung 17 als Querrichtung 17 zu der Umfangsrichtung 18 orientiert. Die Richtung 17 ist in diesem Fall zumindest näherungsweise senkrecht zu der Umfangsrichtung 18. Neben dem Zugmittel 3 sind in diesem Ausführungsbeispiel weitere Zugmittel 3A, 3B, 3C, 3D, 3E vorgesehen, die zumindest näherungsweise über einen Winkel von 180° an der Traktionsfläche 15 der Treibscheibe 2 anliegen. Die durch die Vertiefungen 16A bis 16C gebildete Struktur erstreckt sich gleichmäßig über die gesamte Traktionsfläche 15, das heißt um 360°. Hierbei ist vorzugsweise ein gleichmäßiger Abstand 19 zwischen den Vertiefungen 16A bis 16C gewählt, wie es anhand der Vertiefungen 16A, 16B veranschaulicht ist. Zum Erreichen einer konstanten Traktionsfähigkeit und eines minimalen Verschleisses an der Treibscheibe wie auch am Zugmittel, kann es vorteilhaft sein, die Vertiefungen mit ungleichmässigen Abständen zu erzeugen. Ferner weisen die Vertiefungen 16A bis 16C jeweils in etwa die gleiche Breite 20 auf, wie es anhand der Vertiefung 16C veranschaulicht ist. Die Breite 20 ist in vorteilhafter Weise kleiner als 3 mm, bevorzugt kleiner als 2 mm und besonders bevorzugt kleiner als 1 mm gewählt. Ferner sind die Vertiefungen 16A bis 16C bevorzugt scharfkantig, insbesondere mit einem Kantenradius kleiner als 0,01 mm ausgestaltet.

Durch die Vertiefungen 16A bis 16C wird ein zusätzlicher Beitrag zur Traktionswirkung zwischen der Traktionsfläche 15 der Treibscheibe 2 und den Zugmitteln 3 bis 3E erzielt. Dadurch kann der durch $S_{max}$ bestimmte Bereich vergrößert werden, in welchem das Verhältnis S der Kräfte F1 und F2 liegen kann, ohne dass ein Kriechen zwischen der Treibscheibe 2 und den Zugmitteln 3 bis 3E auftritt.

Bei dem in der Fig. 2 dargestellten Ausführungsbeispiel sind die Vertiefungen 16A bis 16C durch in der Richtung 17 verlaufende Ausnehmungen gebildet, die an Anlageflächen 21, 21A, 21B, 21C, 21D, 21E unterbrochen sind. Somit sind die Vertiefungen 16A, 16B, 16C nur im Bereich von Flanken 22, 23 ausgestaltet, wobei zur Vereinfachung der Darstellung nur die Flanken 22, 23 gekennzeichnet sind, denen das Zugmittel 3 zugeordnet ist. Die Ausnehmungen zur Ausgestaltung der Vertiefungen 16A bis 16C können aber auch in den Anlageflächen 21, 21A bis 21E ausgestaltet sein.

Die Traktionsfläche 15 kann ganz oder teilweise mit Riefen oder dergleichen versehen sein, um eine Oberflächenrauheit der Traktionsfläche 15 zu erhöhen. Die Erhöhung der Oberflächenrauheit kann insbesondere in den Flanken 22, 23 und/oder den Anlageflächen 21, 21A bis 21E vorgesehen sein.

Bevorzugte Zugmittel sind als ummantelte Stahlseile bzw. als Riemen ausgestaltet, wobei letztere vorzugsweise eine elastomere Ummantelung umfassen, in welche Stahl- oder Kunstfaser-Seilelemente als Zugverstärkung eingebettet sind. Die Ummantelung weist bevorzugt einen trapezförmigen oder einen runden oder einen rechteckigen Querschnitt oder einen Querschnitt mit mehreren V-förmigen oder trapezförmigen Rippen auf. Fig. 4 zeigt Es können jedoch auch so genannte Keilrippenriemen verwendet werden, die im Wesentlichen einen Verbund aus mehreren Keilriemen bilden. Selbstverständlich ist die vorliegende Erfindung auch bei Treibscheiben mit flachen oder gewölbten Treibflächen anwendbar.

Die Zugmittel 3, 3A bis 3E sind durch die in der Fig. 1 veranschaulichten Kräfte F1, F2 beaufschlagt, so dass diese in dem Bereich 25 (Fig. 1) der Traktionsfläche 15, der sich über zumindest im Wesentlichen 180° erstreckt, etwas in die Vertiefungen 16A bis 16C der Struktur eingreifen. Dadurch halten sich die Zugmittel 3, 3A bis 3E gewissermaßen an den Vertiefungen 16A bis 16C an. Hierdurch ist die Traktionswirkung zwischen der Traktionsfläche 15 der Treibscheibe 2 und den Zugmitteln 3A bis 3E verstärkt.

Die Vertiefungen 16A, 16B, 16C können durch eine Laserbearbeitung, durch Schleifen, durch Walzprägen oder auf andere Weise erzeugt werden.

Fig. 3 zeigt den in Fig. 2 mit III bezeichneten Ausschnitt der Treibscheibe 2 einer Aufzuganlage 1 entsprechend einem zweiten Ausführungsbeispiel der Erfindung. In diesem Ausführungsbeispiel sind zur Ausbildung einer Struktur auf der Traktionsfläche 15 der Treibscheibe 2 eine Vielzahl von Vertiefungen 16D, 16E in Form von Rillen ausgestaltet, wobei in der Fig. 3 zur Vereinfachung der Darstellung nur die Rillen 16D, 16E gekennzeichnet sind. Dabei erstrecken sich die Rillen 16E, 16D durch das Material der Treibscheibe 2, so dass durchgehende Öffnungen in der Treibscheibe 2 ausgestaltet sind. Die Ableitung von Schmutz, überschüssigem Schmiermittel oder dergleichen ist dadurch erleichtert. Die Rillen 16D, 16E erstrecken sich in diesem Ausführungsbeispiel unterbrechungsfrei über die gesamte Traktionsfläche 15 in der Querrichtung 17. Die Rillen 16D, 16E können beispielsweise mittels Laserschneiden ausgestaltet sein.

Die Traktionsfläche 15 kann zwischen den Vertiefungen 16D, 16E mit einer haftverstärkenden Strukturbeschichtung 30 versehen sein. Die Strukturbeschichtung kann beispielsweise kalottenförmige Mikrostrukturen oder dünne Hartstoffschichten mit Nanopartikeln aufweisen.

Vorteilhaft ist es auch, dass die Rillen 16D, 16E scharfkantig ausgestaltet sind.

Die Treibscheibe 2 kann als separate Scheibe ausgestaltet sein. Die Treibscheibe 2 kann auch einstückig mit einer Welle eines Antriebsmotors oder einer Abtriebswelle eines Getriebemotors ausgestaltet sein.

Die Zugmittel 3, 3A bis 3E können an die Treibscheibe 2 angepasst ausgestaltet sein. Dabei können die Zugmittel 3, 3A bis 3E zumindest teilweise zu der Struktur der Traktionsfläche 15 der Treibscheibe 2 komplementäre Traktionsflächen an dem Mantel 24 aufweisen.

Die Erfindung ist nicht auf die beschriebenen Ausführungsbeispiele beschränkt.

**Patentansprüche**

1. Treibscheibe (2) zum Antreiben zumindest eines Zugmittels (3), insbesondere Riementreibscheibe zum Antreiben zumindest eines Keilrippenriemens, mit zumindest einer Traktionsfläche (15), wobei an der Traktionsfläche (15) zumindest eine Struktur (16A-16E) ausgestaltet ist, die zur Traktionswirkung zwischen der Traktionsfläche (15) und dem Zugmittel (3) in einer Umfangsrichtung (18) beiträgt.

2. Treibscheibe nach Anspruch 1,
**dadurch gekennzeichnet,**
**dass** die Struktur (16A-16E) an der Traktionsfläche (15) in zumindest einer Richtung (17) verläuft, die von der Umfangsrichtung (18) abweicht.

3. Treibscheibe nach Anspruch 1 oder 2,
**dadurch gekennzeichnet,**
**dass** die Struktur (16A-16E) an der Traktionsfläche (15) in einer Richtung (17) verläuft, die zumindest im Wesentlichen quer zu der Umfangsrichtung (18) orientiert ist.

4. Treibscheibe nach einem der Ansprüche 1 bis 3,
**dadurch gekennzeichnet,**
**dass** die Struktur eine oder mehrere Vertiefungen (16A-16E) aufweist.

5. Treibscheibe nach Anspruch 4,
**dadurch gekennzeichnet,**
**dass** die Vertiefung (16A-16E) durch eine Ausnehmung gebildet ist.

6. Treibscheine nach Anspruch 4,
**dadurch gekennzeichnet,**
**dass** die Vertiefung (16D, 16E) durch eine Rille gebildet ist.

7. Treibscheibe nach einem der Ansprüche 4 bis 6,
**dadurch gekennzeichnet,**
**dass** die Struktur (16A-16E) eine Vielzahl von Vertiefungen (16A-16E) aufweist und dass eine mittlere Breite (20) einer Vertiefung kleiner als 3 mm ist.

8. Treibscheibe nach Anspruch 7,
**dadurch gekennzeichnet,**
**dass** die mittlere Breite (10) der Vertiefung (16A-16E) kleiner als 2 mm, insbesondere kleiner als 1 mm, ist.

9. Treibscheibe nach einem der Ansprüche 4 bis 8,
**dadurch gekennzeichnet,**
**dass** die Struktur (16A-16E) eine Vielzahl von Vertiefungen aufweist, die gleichmäßig über den Umfang der Treibscheibe (20) verteilt sind.

10. Treibscheibe nach einem der Ansprüche 1 bis 9,
**dadurch gekennzeichnet,**
**dass** die Traktionsfläche (15) zumindest teilweise mit einer haftverstärkenden Strukturbeschichtung (30) versehen ist.

11. Treibscheibe nach Anspruch 10,
**dadurch gekennzeichnet,**
**dass** die Strukturbeschichtung (30) kalottenförmige Mikrostrukturen oder dünne Hartstoffschichten mit Nanopartikeln aufweist.

12. Treibscheibe nach einem der Ansprüche 1 bis 9,
**dadurch gekennzeichnet,**
**dass** die Traktionsfläche (15) zumindest teilweise eine erhöhte Oberflächenrauheit aufweist.

13. Treibscheibe nach Anspruch 12,
**dadurch gekennzeichnet,**
**dass** die Traktionsfläche (15) zum Erhöhen der Oberflächenrauheit Riefen aufweist, die in einer Richtung (17) verlaufen, die von der Umfangsrichtung (18) abweicht.

14. Aufzuganlage (1) mit einer Aufzugkabine (5), die mittels eines Zugmittels (3) aufgehängt ist, wobei das Zugmittel (3) über eine Treibscheibe (2) geführt ist, die nach einem der Ansprüche 1 bis 13 ausgestaltet ist.

15. Aufzuganlage nach Anspruch 14,
**dadurch gekennzeichnet,**
**dass** das Zugmittel (3) als riemenartiges Zugmittel (3) ausgestaltet ist und dass das Zugmittel (3) einen Mantel (24) aus einem Elastomer aufweist.

**Fig. 1**

3E 16B 3D 3C 3B 3A 3

16A

19

16B

15

16C

18

17

20

III

21E 21D 21C 21B 21A 21

23 22

**Fig. 2**

16D
16E

18

17

30

**Fig. 3**

Europäisches
Patentamt

European
Patent Office

Office européen
des brevets

**EUROPÄISCHER RECHERCHENBERICHT**

Nummer der Anmeldung

EP 09 15 1077

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 121 220 A (OTIS ELEVATOR CO) 24. Juli 1968 (1968-07-24) * Seite 1, Zeilen 11-14 * * Seite 2, Zeilen 35-39,122-124 * * Abbildungen 1-5 * * Seite 4, Zeilen 20-39 * | 1-6,9,14 | INV. B66B15/04 |
| Y | | 12,13,15 | |
| X | JP 54 081569 A (NIPPON ELECTRIC CO) 29. Juni 1979 (1979-06-29) * Abbildungen 1-3 * | 1,10 | |
| Y | | 11 | |
| Y | US 2007/062762 A1 (ACH ERNST [CH]) 22. März 2007 (2007-03-22) * Absatz [0024] * * Absätze [0046], [0047] * * Abbildung 6 * | 11 | |
| Y | US 6 371 448 B1 (DE ANGELIS CLAUDIO [CH]) 16. April 2002 (2002-04-16) * Seite 2, Zeilen 57-59 * * Seite 3, Zeilen 8-13 * | 12,13 | RECHERCHIERTE SACHGEBIETE (IPC) B66B F16H |
| Y | US 2007/034454 A1 (DOLD FLORIAN [CH] ET AL) 15. Februar 2007 (2007-02-15) * Absatz [0017] * * Absätze [0050], [0051] * * Abbildung 5 * | 15 | |

Der vorliegende Recherchenbericht wurde für alle Patentansprüche erstellt

| Recherchenort | Abschlußdatum der Recherche | Prüfer |
|---|---|---|
| Den Haag | 2. Juni 2009 | Miklos, Zoltan |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**　　　　EP 09 15 1077

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-06-2009

| Im Recherchenbericht angeführtes Patentdokument | | Datum der Veröffentlichung | Mitglied(er) der Patentfamilie | | Datum der Veröffentlichung |
|---|---|---|---|---|---|
| GB 1121220 | A | 24-07-1968 | KEINE | | |
| JP 54081569 | A | 29-06-1979 | KEINE | | |
| US 2007062762 | A1 | 22-03-2007 | AU | 2006220377 A1 | 05-04-2007 |
| | | | BR | PI0603830 A | 14-08-2007 |
| | | | CA | 2560028 A1 | 20-03-2007 |
| | | | CN | 1935616 A | 28-03-2007 |
| | | | EP | 1764335 A2 | 21-03-2007 |
| | | | JP | 2007084341 A | 05-04-2007 |
| | | | NZ | 549732 A | 29-02-2008 |
| US 6371448 | B1 | 16-04-2002 | AR | 026279 A1 | 05-02-2003 |
| | | | AT | 316213 T | 15-02-2006 |
| | | | AU | 782437 B2 | 28-07-2005 |
| | | | AU | 6959800 A | 03-05-2001 |
| | | | BR | 0005119 A | 29-05-2001 |
| | | | CA | 2324740 A1 | 29-04-2001 |
| | | | CN | 1294271 A | 09-05-2001 |
| | | | DK | 1096176 T3 | 15-05-2006 |
| | | | EP | 1096176 A1 | 02-05-2001 |
| | | | ES | 2255931 T3 | 16-07-2006 |
| | | | HK | 1038607 A1 | 21-04-2006 |
| | | | ID | 27875 A | 03-05-2001 |
| | | | IL | 139055 A | 25-09-2005 |
| | | | JP | 2001139267 A | 22-05-2001 |
| | | | MX | PA00010467 A | 23-05-2002 |
| | | | NO | 20005429 A | 30-04-2001 |
| | | | TR | 200003153 A2 | 21-05-2001 |
| | | | TW | 243792 B | 21-11-2005 |
| | | | ZA | 200005706 A | 16-05-2001 |
| US 2007034454 | A1 | 15-02-2007 | AR | 054176 A1 | 06-06-2007 |
| | | | AU | 2006203118 A1 | 08-02-2007 |
| | | | BR | PI0602877 A | 13-03-2007 |
| | | | CA | 2553244 A1 | 22-01-2007 |
| | | | CN | 1899943 A | 24-01-2007 |
| | | | JP | 2007031148 A | 08-02-2007 |
| | | | KR | 20070012269 A | 25-01-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1169256 B1